# EUROPÄISCHE PATENTSCHRIFT

(11) **EP 1 164 115 B1**
(45) Veröffentlichungstag und Bekanntmachung des Hinweises auf die Patenterteilung: **30.06.2004**
(21) Anmeldenummer: 01111509.4
(22) Anmeldetag: 11.05.2001
(51) Int. Cl.: C04B 41/50, A61K 6/06, B24C 11/00

(54) **Verfahren zur Herstellung von mit Titandioxid beschichteten Strahlpartikeln**
Process for producing sandblasting particles coated with titanium dioxide
Procédé de préparation des particules pour sablage revetues de dioxide de titanium

(30) Priorität: 15.06.2000 DE 10029598
(43) Veröffentlichungstag der Anmeldung: 19.12.2001
(73) Patentinhaber: DeguDent GmbH, 63457 Hanau (DE)
(72) Erfinder: Lange, Gerlinde, 63505 Langenselbold (DE); Schuck, Manfred, 63791 Karlstein (DE); Gutsch, Andreas, Dr., 63691 Ranstadt (DE); Heck, Katja, Dr., 63538 Grosskrotzenburg (DE); Zimmermann, Guido, 63450 Hanau (DE)
(74) Vertreter: Stoffregen, Hans-Herbert, Dr. Dipl.-Phys. Patentanwalt

(56) Entgegenhaltungen:
- DE-U- 29 821 398
- CHUNZHONG LI ET AL: "Preparation of TiO2-coated Al2O3 particles by chemical vapor deposition in a rotary reactor" JOURNAL OF THE AMERICAN CERAMIC SOCIETY, AUG. 1999, AMERICAN CERAMIC SOC, USA, Bd. 82, Nr. 8, Seiten 2044-2048, XP002199350 ISSN: 0002-7820
- DATABASE WPI Section Ch, Week 198918 Derwent Publications Ltd., London, GB; Class E37, AN 1989-134186 XP002199351 & JP 01 079001 A (TOYOTA JIDOSHA KK), 24. März 1989 (1989-03-24)

## Beschreibung

Die Erfindung betrifft ein Verfahren zur Herstellung von mit Titandioxid beschichteten Strahlpartikeln durch Aufsintern von Titandioxid auf die Oberfläche von Strahlpartikeln aus einem Basismaterial.

Mit Titandioxid beschichtete Strahlpartikel werden in DE 298 21 398 U und in Biomedizinische Technik, Band 49, Ergänzungsband 1, 35 (1995) beschrieben, ebenso ein gattungsgemäßes Verfahren zu deren Herstellung. Danach erfolgt die Herstellung derartiger titandioxidbeschichteter Partikel durch Aufsintern einer wässrigen TiO₂-Schlicker-Suspension auf den Partikelwerkstoff. Dabei werden zunächst die Partikel innig mit der TiO₂-Schlicker-Suspension vermischt, das Lösungsmittel entfernt und dann der auf den Partikeln getrocknete Schlicker bei Temperaturen zwischen 300 und 1400 °C aufgesintert. Derartige titandioxidbeschichtete Partikel, vorzugsweise solche aus Edelkorund (Aluminiumoxid, Al₂O₃) als Basismaterial, werden vornehmlich zum Strahlen und gleichzeitigen tribochemischen Beschichten mit Titandioxid von Bauteilen für den Einsatz im menschlichen Körper und insbesondere in der Mundhöhle verwendet.

Bei der Herstellung von Bauteilen aus metallischen Werkstoffen für einen derartigen Einsatz, wie insbesondere in der Dentaltechnik bei der Fertigung von Gerüsten aus Dentallegierungen für Dentalrestaurationen, ist das Sandstrahlen ein üblicher Arbeitsschritt zur Oberflächenbearbeitung. Als Strahlsandmaterial wird hierbei in der Regel Korund eingesetzt.

Bei der Anfertigung von Zahnersatz werden zur Erzielung einer besseren Ästhetik prothetische Metallgerüste wie Kronen oder Brücken mit zahnfarbenem Verblendmaterial beschichtet.

Insbesondere bei herausnehmbarem Zahnersatz und Langzeitprovisorien werden Kunststoffmaterialien als Verblendmaterial gegenüber Keramiken aufgrund ihrer typischen Werstoffeigenschaften, wie etwa der höheren Elastizität, bevorzugt verwendet. Da sich die Eigenschaften der Verblendwerkstoffe auf Kunststoffbasis von denen der Legierungen, aus denen die Metallgerüste gefertigt sind, deutlich unterscheiden, ist ein dauerhafter Verbund ohne die Verwendung von Haftverbundsystemen nicht gewährleistet. Erschwerend wirken sich die extremen Bedingungen des Mundmilieus aus, wobei die Materialien Feuchtigkeit, Temperaturwechsel und mechanischer Belastung sowie den individuellen Lebensgewohnheiten wie Ernährungsweise und etwaiger Medikamenteneinnahme ausgesetzt sind. Durch diese Einflüsse bildet sich häufig schon nach kurzer Zeit ein Randspalt zwischen Metallgerüst und Kunststoffverblendung. Durch die einsetzende Metallkorrosion und das Eindringen von Mikroorganismen kommt es im Randbereich zu Verfärbungen. Bedingt durch die unterschiedlichen Wärmeausdehnungskoeffizienten von Metall und Kunststoff und des Polymerisationsschrumpfes von letzterem entstehen Spannungen, die unterstützt durch die Randspaltbildung und den Feuchteeinfluss sowie den mechanischen Belastungen zu Schädigungen bis hin zum Ablösen der Verblendung führen können.

Bekannte Verfahren zur Erzeugung fester und möglichst spaltfreier Verbunde von Metall und Kunststoff beruhen im Grundsatz im wesentlichen darauf, daß in einem ersten Schritt eine silikatische Schicht auf die Metalloberfläche aufgebracht wird, die dann in einem zweiten Schritt durch Behandlung mit einem Silan-Haftvermittler, etwa einem funktionellen Alkoxysilan, silanisiert wird. Das Silan dient als chemisches Bindeglied zwischen der silikatisierten Metalloberfläche und dem polymeren Verblendwerkstoff. Die bekannten Verfahren unterscheiden sich im wesentlichen durch die Art und Weise der Aufbringung der Silikatschicht. In DE 38 02 043 wird diese durch tribochemische Beschichtung beim Strahlen der Metalloberfläche mittels mit Siliziumdioxid beschichtetem Korund als Strahlsand erzeugt. Ein derartiges Verfahren ist unter der Bezeichnung "Rocatec" in der Dentaltechnik eingeführt.

Aus den eingangs genannten Literaturzitaten ergibt sich, daß eine tribochemische Beschichtung mit Titandioxid eine bessere Biokompatibilität aufweist als silikatische Beschichtungen und in Kombination mit einem Silan-Haftvermittler aufgrund höherer Hydrolysebeständigkeit zu einem deutlich besseren Haftverbund zwischen Metall und Kunststoffverblendung führt.

In der Praxis hat sich allerdings gezeigt, daß die Herstellung derartiger titandioxidbeschichteter Strahlpartikel durch Aufsintern einer wässrigen TiO₂-Schlicker-Suspension auf den Partikelwerkstoff zu einem nicht ausreichend einheitlichem Produkt führt. Dieses weist insbesondere Partikel mit hinsichtlich Menge, Dicke und Verteilung variierender TiO₂-Beschichtung sowie freie TiO₂-Partikel mit hohem Feinanteil auf. Beim Arbeitsgang des Strahlens und tribochemischen Beschichtens wirkt sich dies nachteilig auf die Verankerung der TiO₂-Schicht in und auf der Metalloberfläche aus, wobei insbesondere der praktisch unvermeidliche Anteil an TiO₂-Feinstpartikeln den resultierenden Metall-Kunststoff-Haftverbund beeinträchtigt.

Der vorliegenden Erfindung lag daher die Aufgabenstellung zugrunde, ein Verfahren zur Herstellung von mit Titandioxid beschichteten Strahlpartikeln aufzufinden und zu entwikkeln, das die geschilderten Nachteile nicht aufweist.

Überraschend wurde nun gefunden, daß sich insbesondere im Langzeiteinsatz wesentlich bessere Metall-Kunststoff-Haftverbundwerte erzielen lassen, wenn man zum Strahlen von metallischen Bauteilen und gleichzeitigem tribochemischen Beschichten mit Titandioxid Strahlpartikel verwendet, die durch Aufsintern von Titandioxid auf Strahlpartikel erhalten worden sind, wobei das Beschichtungsverfahren so durchgeführt wird, daß man ein Gemisch aus feinteiligem Titandioxid und Strahlpartikel mit Hilfe von Förderluft kontinuierlich durch die Flamme eines Flammreaktors leitet und bei einer mittleren Verweilzeit von 0,1 bis 5 Sekunden in einem Temperaturbereich von 600 bis 1200 °C das Titandioxid auf der Oberfläche der Strahlpartikel aufsintert.

Gegenstand der Erfindung ist somit ein Verfahren zur Herstellung von mit Titandioxid beschichteten Strahlpartikeln durch Aufsintern von Titandioxid auf die Oberfläche von Strahlpartikeln aus einem Basismaterial, das dadurch gekennzeichnet ist, daß man ein Gemisch aus feinteiligem Titandioxid und Strahlpartikel mit Hilfe von Förderluft kontinuierlich durch die Flamme eines Flammreaktors leitet, wobei bei einer mittleren Verweilzeit von 0,1 bis 5 Sekunden in einem Temperaturbereich von 600 bis 1200 °C das Titandioxid auf der Oberfläche der Strahlpartikel aufsintert.

Kern des erfindungsgemäßen Verfahrens ist, daß ein trockenes Pulvergemisch in einem Flammreaktor zur Reaktion gebracht wird, wobei das Titandioxid durch die direkte Hitzeeinwirkung einer Flamme auf die Strahlpartikel aufgesintert wird.

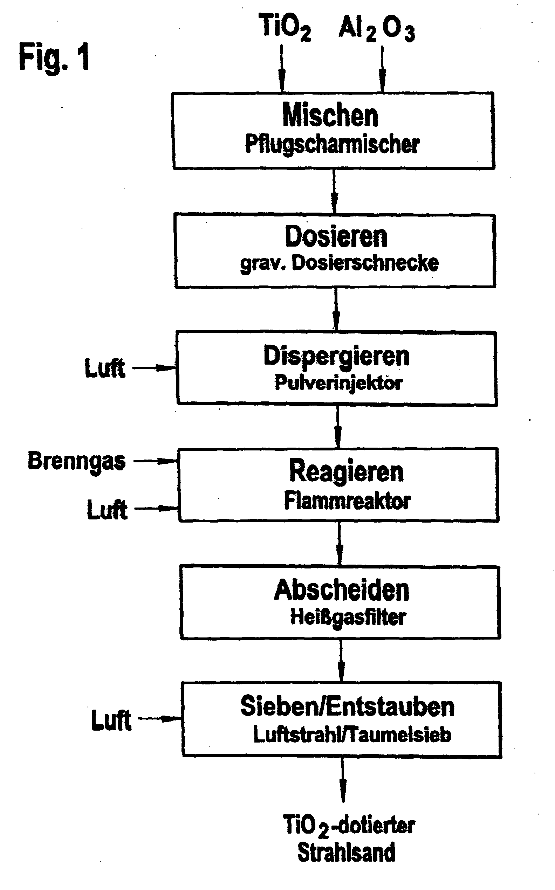

Fig. 1 zeigt schematisch den prinzipiellen Ablauf des Verfahrens am Beispiel der Beschichtung von Korund-Strahlsand mit TiO₂.

Es wird zunächst ein homogenes Gemisch von feinteiligem Titandioxid und Strahlpartikel erzeugt. Für die Trockenmischung der Pulver können übliche Mischverfahren und Apparaturen, beispielsweise ein Pflugscharmischer, eingesetzt werden.

Das Gemisch wird dann mit zweckentsprechender Förderrate dosiert einem Flammreaktor zugeführt. Hierfür eignet sich beispielsweise eine gravimetrische Dosierschnecke.

Dort wird das Pulvergemisch mit Hilfe von Förderluft kontinuierlich durch die Flamme des Flammreaktors geführt. Bei einer mittleren Verweilzeit von 0,1-bis 5 Sekunden in einem Temperaturbereich von 600 bis 1200 °C wird das Titandioxid auf der Oberfläche der Strahlpartikel aufgesintert. Die Flamme wird zweckmäßigerweise mit Brenngas und Luft betrieben.

Das Gemisch wird vorzugsweise mit Hilfe von Förderluft mit einer Geschwindigkeit von 1 bis 50 m/s zentral in eine mit Brenngas betriebene Ringflamme geblasen.

Das Sinterprodukt wird dann aus dem Brenrigasstrom abgeschieden, beispielsweise mit einem Heissgasfilter, und gesammelt.

Als letzter Schritt kann sich ein Sieben und Entstauben des erhaltenen, mit TiO₂ beschichteten Strahlsandes anschließen.

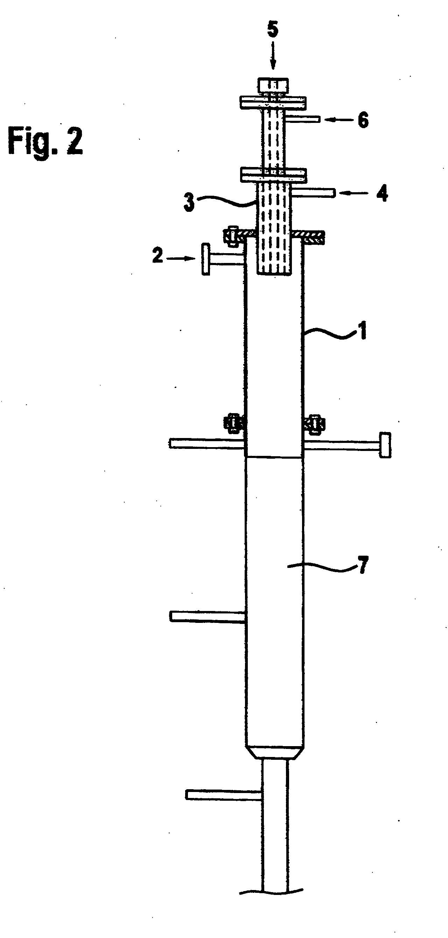

Fig. 2 zeigt beispielhaft in schematischer Darstellung den prinzipiellen Aufbau eines Flammreaktors, der für die Durchführung des erfindungsgemäßen Verfahrens geeignet ist. Der Reaktor ist hierbei als Rohrreaktor ausgeführt. Der Flammreaktor besteht aus einer Brennkammer (1) mit Luftzuführung (2), einer Brennerlanze (3) mit Brenngaszuführung (4), Pulverinjektor (5), Stickstoffspülung (6) und einem Reaktionsrohr (7). Das Brenngas wird über den Ringspalt der Brennerlanze (3) in die Brennkammer (1) geleitet. Die Verbrennungsluft (2) wird tangential in die Brennkammer (1) eingebracht. Die Zündung erfolgt am Brennerlanzenmund, wobei eine laminare Diffussionsflamme entsteht, die sich dabei als Ringflamme ausbildet. Das Mischpulver wird mit Hilfe etwa einer gravimetrischen Dosierschnecke über den mit Druckluft betriebenen Pulverinjektor (5) in die Brenngasflamme in der Brennkammer (1) des Flammreaktors dispergiert. Die Zuführung erfolgt zentral in die Flamme über den als Kernrohr ausgebildeten Pulverinjektor (5). Durch die Förderluft bildet sich in der Eintragszone eine zweite Flammenfront aus. Das Titandioxid wird während der Verweildauer in der Flamme und im Reaktionsrohr (7) auf die Aluminiumoxidpartikeln thermisch fixiert und aufgesintert.

Für die praktische Durchführung des Sintervorganges im Flammreaktor typische Prozeßparameter sind etwa:

| | |
|---|---|
| Durchsatzmenge | 0,1 - 100 kg/h (Pulvergemisch) |
| Temperatur | 600 - 1200 °C |
| Volumenstrom | 1-20 m³N/h (Wasserstoff) |
| | 5 - 100 m³N/h (Sekundärluft) |
| | 0,5 - 10 m³N/h (Dispergierluft) |
| Verweilzeit | 0,1 - 5 s |

Die Strahlsandpartikeln werden zum Beispiel mit einer Metallfilterkerze bei 300 - 550°C aus dem Abgasstrom abgeschieden, in Behältnissen gesammelt und restabgekühlt.

Der mit TiO₂ beschichtete Strahlsand wird zweckmäßigerweise auf eine Korngröße unter 500 µm abgesiebt, etwa mit einem Luftstrahl-Taumelsieb. Der Austrag von überschüssigem Titandioxid kann mittels Klassierluft erfolgen.

Mit dem erfindungsgemäßen Verfahren können Strahlsande aus beliebigen Basismaterialien mit Titandioxid beschichtet werden. Vorzugsweise bestehen die Strahlsandpartikel aus einem keramischen Werkstoff, aus Glas oder aus Metall als Basismaterial. Besonders bevorzugt sind Strahlpartikel, die aus Aluminiumoxid als Basismaterial bestehen.

Form und Größe der Strahlsandpartikel ist weitgehend unkritisch. Die Partikel können im wesentlichen kugelförmige oder unregelmäßig geformte, eckige oder kantige Gestalt aufweisen. Der Durchmesser der Strahlpartikel liegt im Bereich von 1 µm bis 500 µm und vorzugsweise im Bereich von 20 µm bis 250 µm.

Das zur Beschichtung eingesetzte Titandioxid ist von handelsüblicher Qualität und kann Partikelgrößen im Bereich von 0,001 µm bis 10 µm, vorzugsweise im Bereich von 0,01 µm bis 0,1 µm, aufweisen.

Die Oberflächenbelegung der Partikel mit Titandioxid ist vorzugsweise vollflächig, kann aber auch partiell sein. Dies kann ohne weiteres durch die Einstellung des Mengenverhältnisses von Strahlpartikel und Titandioxid eingestellt werden. Zweckmäßig ist, wenn ein Gemisch aus 0,1 bis 30 Gew.%, vorzugsweise aus 1 bis 5 Gew.%, Titandioxid und 70 bis 99,9 Gew.%, vorzugsweise 95 bis 99 Gew.%, Strahlpartikel eingesetzt wird.

Die erfindungsgemäß hergestellten, mit Titandioxid beschichteten Strahlpartikel können sehr vorteilhaft zum Strahlen und gleichzeitigen tribochemischen Beschichten mit Titandioxid von Bauteilen für den Einsatz im menschlichen Körper und insbesondere in der Mundhöhle verwendet werden.

Derartige Bauteile zum Einsatz im menschlichen Körper und in der Mundhöhle können aus metallischen, keramischen, metallkeramischen oder Komposit-Werkstoffen bestehen.

Eine tribochemische Beschichtung mit Titandioxid ist insbesondere bei Dentalrestaurationen und Implantaten aus metallischen Werkstoffen vorteilhaft. Dabei zeigen TiO₂-Beschichtungen gegenüber anderen Materialien oder Werkstoffoberflächen eine besonders ausgeprägte Biokompatibilität.

Besonders vorteilhaft ist die Verwendung der erfindungsgemäß mit TiO₂ beschichteten Partikel als Strahlmittel bei der dentaltechnischen Fertigung von mit Kunststoff verblendetem Zahnersatz. Hierbei wird das Metallgerüst mit einem aus erfindungsgemäß mit Titandioxid beschichteten Partikeln bestehendem Strahlsand in an sich bekannter Weise gestrahlt, anschließend die gestrahlte und dadurch tribochemisch mit TiO₂ belegte Oberfläche mit einem in der Dentaltechnik üblichen Silan-Haftvermittler behandelt und dann in üblicher Weise die Kunstoffverblendung aufgebracht. Überraschend hat sich dabei gezeigt, daß im Vergleich zu anderen Methoden oder Verbundsystemen, insbesondere dem auf TiO₂-Basis gemäß DE 298 21 398 U aber auch dem "Rocatec-Verfahren" auf silikatischer Basis, eine unerwartete Erhöhung des Haftverbundes zwischen Metallgerüst und Verblendwerkstoff aus Kunststoff im Zahnersatz zu verzeichnen ist. Dies zeigt sich besonders deutlich und praxisrelevant im Langzeitversuch gegenüber Temperaturwechseln und Feuchtigkeitseinwirkung bei Körperbedingungen.

Zur Prüfung des Haftverbundes von Metall-Kunststoff wurde eine Prüfmethode in Anlehnung an ISO 10 477 angewendet.

Zahntechnisch gegossene metallische Prüfkörper (Abmessungen: 1 = 20 ± 1 mm, b = 10 ± 1 mm, d = 2 ± 0,5 mm) aus handelsüblichen Dentallegierungen wurden in einem in der Dentaltechnik gebräuchlichen Strahlgerät mit Korund (Korngröße ca. 110 µm) unter Verwendung einer Düse mit einem Durchmesser von 0,85 mm und einem Druck von 2 bar 20s gleichmäßig gestrahlt. Anschließend wurden die Prüfkörper mit dem erfindungsgemäß mit TiO₂-beschichteten Strahlsand bei einem Druck von 3 bar aber ansonsten gleichen Bedingungen unter angeschlossener Absaugung gestrahlt. Die beschichtete Fläche betrug ca. 1 cm² der Probenmitte. Die beschichtete Fläche wurde mit einem trockenem Pinsel von lose anhaftenden Partikeln gesäubert, dann wurde das Silan aufgetragen und 2 Minuten abgelüftet. Anschließend wurde der Opaker eines handelsüblichen polymeren Verblendwerkstoffs in 2 Schichten aufgetragen und jeweils polymerisiert. Das Dentin wurde mit Hilfe einer konischen Stahlform (Durchmesser d = 5 mm, Höhe h = 2,3 mm) auf das Plättchen aufgetragen und in der Form polymerisiert. Anschließend wurde die Probe entformt und in einem handelsüblichen Polymerisationsgerät nachvergütet.

Jeweils 5 Proben wurden ohne weitere Belastung abgeschert und jeweils 5 weitere Proben wurden in Wasser 30000, 70000 und 110000 Temperaturwechseln (5°C/55°C; Eintauchzeit jeweils 30 Sekunden) ausgesetzt, wobei jeweils 5 Proben nach 110000 Wechseln zusätzlich nach 12 Monaten Wasserlagerung bei 37°C geprüft wurden.

Zur Ermittlung der Scherfestigkeit wurde der Verblendkunststoff mit Hilfe einer Universalprüfmaschine mit einer Vorschubgeschwindigkeit von 1mm/min parallel zur Metalloberfläche abgeschert. Die nachfolgenden Tabellen 1 bis 4 zeigen die Ergebnisse.

**Tabelle 1**

| Legierung: Degunorm ® (hochgoldhaltige Edelmetallegierung) Verblendkunststoff: CompoPlus ® (Acrylat-Basis) | | | | | |
|---|---|---|---|---|---|
| | **Scherfestigkeit (MPa)** | | | | |
| **Beispiel** | **initial** | **30000 TW 70000 TW** | | **110000 TW** | **110000 TW 12 Monate Wasserla- gerung** |
| Rocatec (tribochemisch Silikat) | 15,1 | 11,9 | 9,3 | 8,8 | 8,6 |
| DE 298 21 398 (tribochemisch TiO₂) | 16,5 | 15,7 | 14,6 | 11,5 | 10,4 |
| Erfindung | 12,8 | 16,1 | 13,4 | 13,0 | 12,5 |

**Tabelle 2**

| Legierung: Degupal® G (Palladium-Basis-Legierung) Verblendkunststoff: CompoPlus® (Acrylat-Basis) | | | | | |
|---|---|---|---|---|---|
| **Beispiel** | **Scherfestigkeit (MPa)** | | | | |
| | **initial** | **30000 TW** | **70000 TW** | **110000 TW** | **110000 TW 12 Monate Wasser bei 37°C** |
| Rocatec (tribochemisch Silikat) | 11,9 | 11,4 | 7,4 | 7,1 | 6,9 |
| DE 29 821 398 (tribochemisch TiO₂) | 17,2 | 11,1 | 8,3 | 5,5 | 5,3 |
| Erfindung | 13,9 | 13,7 | 12,6 | 11,5 | 10,8 |

**Tabelle 3**

| Legierung: Pallatop® (Palladium-Gold-Legierung) Verblendkunststoff: CompoPlus® (Acrylat-Basis) | | | | | |
|---|---|---|---|---|---|
| **Beispiel** | **Scherfestigkeit (MPa)** | | | | |
| | **initial** | **30000 TW** | **70000 TW** | **110000 TW** | **110000 TW 12 Monate Wasser bei 37°C** |
| Rocatec (tribochemisch Silikat) | 15,8 | 14,3 | 12,3 | 10,5 | 10,0 |
| DE 298 21 398 (tribochemisch TiO ₂ ) | 15,8 | 13,7 | 12,4 | 9,3 | 8,5 |
| Erfindung | 18,7 | 18,3 | 15,5 | 14,1 | 13,8 |

**Tabelle 4**

| Erfindung in Verbindung mit verschiedenen Dentallegierungen und Verblendkunststoff CompoPlus® (Acrylat-Basis) | | | | |
|---|---|---|---|---|
| | **Scherfestigkeit (MPa)** | | | |
| Beispiel | **initial** | **30000 TW** | **70000 TW** | **110000 TW** |
| Degunorm® | 12,8 | 16,1 | 13,4 | 13,0 |
| Stabilor® NF IV | 14,6 | 17,9 | 15,4 | 15,6 |
| Palliag® M | 14,0 | 13,9 | 13,6 | 13,0 |
| Pallatop® | 18,7 | 18,3 | 15,5 | 14,1 |
| Degupal® G | 13,9 | 13,7 | 12,6 | 11,5 |
| Biosil® 1 | 14,3 | 17,3 | 17,4 | 14,6 |

Die Ergebnisse aus Tabelle 1 bis 3 zeigen, daß mit allen Systemen initial, also ohne Thermozyklierung und Wasserlagerung gute bis vorzügliche Haftverbundwerte erzielt werden. Nach Thermozyklierung und Wasserlagerung ist bei den Verbundsystemen und Methoden nach dem Stand der Technik ein starker Abfall der Haftverbundeigenschaften zu verzeichnen, wobei zum Teil nur die Hälfte bis ein Drittel der Initialwerte erreicht werden. Bei Verbundwerten kleiner als 8 MPa ist in der klinischen Anwendung und unter zusätzlicher mechanischer Belastung mit Abplatzungen zu rechnen.

Im Vergleich dazu zeigen sich bei Anwendung der erfindungsgemäß mit TiO₂ beschichteten Strahlmittel generell bei allen Legierungen (Tabelle 4) auch nach Thermozyklierung und Wasserlagerung sehr gute Haftverbundeigenschaften mit auch nach hohen Temperaturwechselzahlen und Langzeitwasserlagerung nur geringem Abfall (Tabellen 1 - 3).

## Patentansprüche

1. Verfahren zur Herstellung von mit Titandioxid beschichteten Strahlpartikeln durch Aufsintern von Titandioxid auf die Oberfläche von Strahlpartikeln aus einem Basismaterial, **dadurch gekennzeichnet, daß** man ein Gemisch aus feinteiligem Titandioxid und Strahlpartikeln mit Hilfe von Förderluft kontinuierlich durch die Flamme eines Flammreaktors leitet, wobei bei einer mittleren Verweilzeit von 0,1 bis 5 Sekunden in einem Temperaturbereich von 600 bis 1200 °C das Titandioxid auf der Oberfläche der Strahlpartikel aufsintert.

2. Verfahren nach Anspruch 1, **dadurch gekennzeichnet, daß** das Gemisch mit Hilfe von Förderluft mit einer Geschwindigkeit von 1 bis 50 m/s zentral in eine mit Brenngas betriebene Ringflamme geblasen wird.

3. Verfahren nach Anspruch 1 oder 2, **dadurch gekennzeichnet, daß** die Strahlpartikel aus einem keramischen Werkstoff, aus Glas oder aus Metall als Basismaterial bestehen.

4. Verfahren nach den Ansprüchen 1 bis 3, **dadurch gekennzeichnet, daß** die Strahlpartikel aus Aluminiumoxid als Basismaterial bestehen.

5. Verfahren nach den Ansprüchen 1 bis 4, **dadurch gekennzeichnet, daß** die Strahlpartikel im wesentlichen kugelförmige oder unregelmäßig geformte, eckige oder kantige Gestalt aufweisen.

6. Verfahren nach den Ansprüchen 1 bis 5, **dadurch gekennzeichnet, daß** der Partikeldurchmesser der Strahlpartikel im Bereich von 1 µm bis 500 µm, vorzugsweise im Bereich von 20 µm bis 250 µm, liegt.

7. Verfahren nach den Ansprüchen 1 bis 6, **dadurch gekennzeichnet, daß** das Titandioxid Partikelgrößen im Bereich von 0,001 µm bis 10 µm, vorzugsweise im Bereich von 0,01 µm bis 0,1 µm, aufweist.

8. Verfahren nach den Ansprüchen 1 bis 7, **dadurch gekennzeichnet, daß** ein Gemisch aus 0,1 bis 30 Gew.%, vorzugsweise aus 1 bis 5 Gew.%, Titandioxid und 70 bis 99,9 Gew.%, vorzugsweise 95 bis 99 Gew.%, Strahlpartikel eingesetzt wird.

## Claims

1. A process for preparing grit blasting particles coated with titanium dioxide by sinter-fusing titanium dioxide on the surface of grit blasting particles made of a base material,
**characterized in**
**that** a mixture of finely divided titanium dioxide and grit blasting particles is passed continuously through the flame in a flame reactor, with the aid of conveying air, wherein the titanium dioxide is sinter-fused on the surface of the grit blasting particles over an average residence time of 0.1 to 5 seconds in a temperature range from 600 to 1200°C.

2. A process according to claim 1,
**characterized in**
**that** the mixture is blown at a rate of 1 to 50 m/s, with the aid of conveying air, centrally into a ring flame operated with fuel gas.

3. A process according to claim 1 or 2,
**characterized in**
**that** the grit blasting particles consist of a ceramic material, glass or metal as the base material.

4. A process according to claims 1 to 3,
**characterized in**
**that** the grit blasting particles consist of aluminium oxide as the base material.

5. A process according to claims 1 to 4,
**characterized in**
**that** the grit blasting particles are substantially spherical in shape or have an irregular, angular or rough-edged shape.

6. A process according to claims 1 to 5,
**characterized in**
**that** the particle diameter of the grit blasting particles is in the range 1 µm to 500 µm, preferably in the range 20 µm to 250 µm.

7. A process according to claims 1 to 6,
**characterized in**
**that** the titanium dioxide has particle sizes in the range 0.001 µm to 10 µm, preferably in the range 0.01 µm to 0.1 µm.

8. A process according to claims 1 to 7,
**characterized in**
**that** a mixture of 0.1 to 30 wt.%, preferably 1 to 5 wt.%, of titanium dioxide and 70 to 99,9 wt.%, preferably 95 to 99 wt.%, of grit blasting particles is used.

## Revendications

1. Procédé de préparation de particules pour sablage, revêtues de dioxyde de titane par agglomération par frittage de dioxyde de titane à la surface de ces particules pour sablage composées d'un matériau de base,
**caractérisé en ce que**
l'on dirige en continu un mélange de dioxyde de titane fin et de particules pour sablage à l'aide d'air de transport à travers la flamme d'un réacteur à flamme, en obtenant, l'agglomération par frittage du dioxyde de titane à la surface des particules pour sablage avec un temps de séjour moyen compris entre 0,1 et 5 secondes et une plage de températures allant de 600° à 1200°C.

2. Procédé suivant la revendication 1,
**caractérisé en ce que**
le mélange est dirigé à l'aide d'air de transport à une vitesse comprise entre 1 et 50 m/s au centre d'une flamme circulaire alimentée au gaz combustible.

3. Procédé suivant la revendication 1 ou 2,
**caractérisé en ce que**
les particules pour sablage se composent d'un matériau céramique, de verre ou de métal comme matériau de base.

4. Procédé suivant les revendications 1 à 3,
**caractérisé en ce que**
les particules pour sablage se composent d'oxyde d'aluminium comme matériau de base.

5. Procédé suivant les revendications 1 à 4,
**caractérisé en ce que**
les particules pour sablage ont essentiellement une forme sphérique ou irrégulière, anguleuse ou présentant des arêtes.

6. Procédé suivant les revendications 1 à 5,
**caractérisé en ce que**
le diamètre particulaire des particules pour sablage se situe entre 1 µm et 500 µm, de préférence entre 20 µm et 250 µm.

7. Procédé suivant les revendications 1 à 6,
**caractérisé en ce que**
le dioxyde de titane présente des particules de taille comprise entre 0,001 µm et 10 µm, de préférence entre 0,01 µm et 0,1 µm.

8. Procédé suivant les revendications 1 à 7,
**caractérisé en ce qu'**
on utilise un mélange composé de 0,1 à 30 % en poids, de préférence de 1 à 5 % en poids de dioxyde de titane et de 70 à 99,9 % en poids, de préférence de 95 à 99 % en poids de particules pour sablage.
